# EUROPÄISCHE PATENTSCHRIFT

(11) **EP 3 149 537 B1**
(45) Veröffentlichungstag und Bekanntmachung des Hinweises auf die Patenterteilung: **09.01.2019**
(21) Anmeldenummer: 15720911.5
(22) Anmeldetag: 30.04.2015
(51) Int. Cl.: G02B 27/01, G02B 7/182, F03G 7/06

(54) **ANZEIGEEINRICHTUNG FÜR EIN KRAFTFAHRZEUG**
DISPLAY DEVICE FOR A MOTOR VEHICLE
DISPOSITIF D'AFFICHAGE POUR VÉHICULE AUTOMOBILE

(30) Priorität: 30.05.2014 DE 102014008201
(43) Veröffentlichungstag der Anmeldung: 05.04.2017
(73) Patentinhaber: Audi AG, 85045 Ingolstadt (DE)
(72) Erfinder: WALL, Christian, 85122 Hitzhofen (DE)
(86) Internationale Anmeldenummer: PCT/EP2015/000888
(87) Internationale Veröffentlichungsnummer: WO 2015/180817

(56) Entgegenhaltungen:
- DE-A1- 10 044 221
- DE-A1-102011 105 689
- JP-A- 2002 283 916
- JP-A- 2006 011 168

## Beschreibung

Die Erfindung geht aus von einer Anzeigeeinrichtung für ein Kraftfahrzeug, wobei die Anzeigeeinrichtung eine Anzeigefläche zum Anzeigen eines Bildes und eine optische Vorrichtung aufweist, welche dazu ausgelegt ist, ein auf der Anzeigefläche angezeigtes Bild als virtuelles Bild über eine Reflexionsfläche zu projizieren. Die optische Vorrichtung weist dabei zumindest einen Reflektor und einen Aktor auf, der zum Bewegen des Reflektors ausgelegt ist. Weiterhin geht die Erfindung aus von einem Kraftfahrzeug mit einer solchen Anzeigeeinrichtung.

Aus dem Stand der Technik sind Anzeigeeinrichtungen, insbesondere HUDs (Head-Up-Displays), bekannt, die üblicherweise ein Display aufweisen, auf dem ein Bild angezeigt werden kann, welches als virtuelles Bild über eine Optik durch Reflexion an der Windschutzscheibe eines Kraftfahrzeugs projiziert wird. Das durch die Optik an die Windschutzscheibe geworfene bzw. projizierte Licht des angezeigten Bildes wird durch die Windschutzscheibe zum Teil reflektiert, wodurch das virtuelle Bild erzeugt wird. Derartige Anzeigeeinrichtungen befinden sich aufgrund ihrer Funktion in Fahrtrichtung vor dem Fahrer und somit im direkten Sonneneinstrahlbereich. Die optischen Elemente der Anzeigeinrichtung, insbesondere Reflektoren bzw. Spiegel, besitzen dabei eine Vergrößerungsfunktion. Dadurch kann es durch Sonneneinstrahlung bei ungünstigen Bedingungen zu einer extremen Erwärmung des Gerätes kommen und die fokussierte Sonnenstrahlung kann das Display der Anzeigeeinrichtung zum Schmelzen bringen.

Aus dem Stand der Technik sind HUDs bekannt, die einen verstellbaren Spiegel aufweisen, der nach vorbestimmten Kriterien verstellt werden kann, um zu verhindern, dass durch die Windschutzscheibe eingestrahltes Sonnenlicht auf das Display des HUDs trifft. Derartige Vorrichtungen weisen dabei Sensorsysteme auf, um z.B. eine Beleuchtungsstärke oder einen Sonnenstand zu erfassen, wie in der DE 10 2011 105 689 A1 beschrieben, oder eine Temperatur in der Nähe des Displays, wie in der DE 100 44 221 A1 beschrieben. Derartige Ausgestaltungen erfordern somit zahlreiche zusätzliche Komponenten, wie Sensoren, Aktoren, wie z.B. Elektromotoren, Steuereinrichtungen zum Ansteuern der Aktoren, und sind somit relativ teuer und auch bauraumaufwendig. Weiterer Stand der Technik ist bekannt aus JP2002283916, JP2006011168 und DE102011105689.

Aufgabe der vorliegenden Erfindung ist es daher einen Anzeigeeinrichtung für ein Kraftfahrzeug und ein Kraftfahrzeug mit einer solchen Anzeigeeinrichtung bereitzustellen, mittels welchen ein effektiverer Schutz von empfindlichen Bauteilen der Anzeigeeinrichtung vor Sonneneinstrahlung bereitgestellt werden kann.
Diese Aufgabe wird gelöst durch eine Anzeigeeinrichtung und ein Kraftfahrzeug mit einer solchen Anzeigeeinrichtung gemäß den unabhängigen Ansprüchen. Vorteilhafte Ausgestaltungen der Erfindung finden sich in den abhängigen Ansprüchen.
Die erfindungsgemäße Anzeigeeinrichtung für ein Kraftfahrzeug weist eine Anzeigefläche zum Anzeigen eines Bildes und eine optische Vorrichtung auf, welche dazu ausgelegt ist, ein auf der Anzeigefläche angezeigtes Bild als virtuelles Bild über eine Reflexionsfläche zu projizieren. Die optische Vorrichtung umfasst dabei zumindest einen Reflektor und einen Aktor, der zum Bewegen des Reflektors ausgelegt ist. Die Erfindung zeichnet sich nun dadurch aus, dass der Aktor ein Formgedächtnismaterial aufweist, das dazu ausgelegt ist, sich durch einen Phasenübergang in Abhängigkeit von einer Temperatur zu verformen und dadurch den Reflektor zu bewegen.
Durch die Verwendung eines Formgedächtnismaterials für den Aktor wird es vorteilhafterweise ermöglicht, den Reflektor, wie z.B. einen Spiegel, stromlos zu bewegen. Da das Formgedächtnismaterial dazu ausgelegt ist, sich in Abhängigkeit von einer Temperatur, insbesondere der Eigentemperatur des Formgedächtnismaterials, unter Beibehaltung seines Aggregatzustands zu verformen, kann eine temperaturabhängige Bewegung des Reflektors realisiert werden, und damit auf besonders einfache und effektive Weise ein Schutz von temperaturempfindlichen Bauteilen der Anzeigevorrichtung bereitgestellt werden, der ohne Sensoren, Steuerung, Regelung und dergleichen auskommt. Die Ausbildung eines solchen Aktors und damit der Anzeigeeinrichtung ist somit besonders kostengünstig und bauraumeffizient. Aufgrund der stromlosen Funktionsweise des Aktors ist die erfindungsgemäße Anzeigevorrichtung zudem besonders energieeffizient und funktioniert zudem auch bei abgestellten Fahrzeugen, bei denen die Zündung ausgeschaltet ist. Dadurch kann auch auf eine Steuerschaltung verzichtet werden, die die Bewegung des Reflektors in Abhängigkeit von einer eingeschalteten oder abgeschalteten Zündung bewegt. Auch im Fall eines Fahrzeugdefekts oder z.B. bei entladener Batterie, wenn also dem Bordnetz keine Spannung bereitgestellt werden kann, ist durch die Erfindung gewährleistet, dass es zu keiner Beschädigung der Anzeigeeinrichtung kommen kann. Ein weiterer Vorteil ist zudem, dass auch bei abgestelltem, inaktivem Fahrzeug der Aktor sich nur verformt, wenn dies temperaturbedingt auch erforderlich ist. Ist das Fahrzeug z.B. im Schatten oder in einer Garage geparkt, so verbleibt der Aktor und damit der Reflektor in seiner betriebsbereiten Ausgangsposition. Nimmt ein Benutzer das Fahrzeug in Betrieb, muss nicht erst ein Bewegen des Reflektors in seine Betriebsposition erfolgen, im Gegensatz zu Anzeigeeinrichtungen, bei denen beim Abstellen des Fahrzeugs der Reflektor grundsätzlich immer in die schützende Position gebracht wird. Die erfindungsgemäße Anzeigeeinrichtung ist somit auch in ihrer Benutzung zeitsparender und deutlich komfortabler für einen Benutzer.

Das Formgedächtnismaterial kann dabei beispielsweise eine Formgedächtnislegierung, wie z.B. Nickel-Titan, Nickel-Titan-Kupfer, Kupfer-Zink, Kupfer-Zink-Aluminium, Kupfer-Aluminium-Nickel, Eisen-Nickel-Aluminium, Eisen-Mangan-Silizium, Zink-Gold-Kupfer, darstellen. Bevorzugt verformt sich das Formgedächtnismaterial in Abhängigkeit von der Eigentemperatur innerhalb eines bestimmten Temperaturintervalls, d.h. bei Temperaturänderungen unterhalb einer bestimmten unteren Temperatur findet keine phasenübergangsbedingte Verformung statt und ab Temperaturen oberhalb einer bestimmten oberen Temperatur findet ebenfalls keine phasenübergangsbedingte Formänderung mehr statt. Formgedächtnislegierungen sind bestimmte Metalle oder Metalllegierungen, die in zwei unterschiedlichen Kristallstrukturen existieren können. Während die meisten Metalle immer dieselbe Kristallstruktur bis zu ihrem Schmelzpunkt besitzen, haben Formgedächtnislegierungen, abhängig von der Temperatur, zwei unterschiedliche Strukturen (Phasen). Die Formwandlung bzw. Formänderung basiert damit auf dem Phasenübergang, d.h. der temperaturabhängigen Gitterumwandlung, zu einer dieser beiden Kristallstrukturen. Eine solche phasenübergangsbedingte Formänderung, wie z.B. eine Ausdehnung, überschreitet dabei die herkömmliche, nicht phasenübergangsbedingte Wärmeausdehnung von Materialien um Größenordnungen, d.h. um einen Faktor mehrerer Zehnerpotenzen.

Unter einer Formänderung können dabei sowohl Änderungen der Geometrie, des Volumens, und/oder der Ausdehnung in eine Richtung oder mehrere voneinander verschiedene Richtungen verstanden werden. Somit gibt es vielzählige Möglichkeiten, die Eigenschaften des Formgedächtnismaterials zur Ausbildung eines Aktors zu nutzen. Der Aktor kann weiterhin als separates Bauteil ausgebildet sein, das am Reflektor mechanisch kontaktierend angeordnet bzw. befestigt ist. Dies lässt bei der Ausbildung des Aktors selbst mehr Freiheitsgrade und Möglichkeiten zu. Der Reflektor und der Aktor können aber auch einstückig ausgebildet sein, z.B. indem der Reflektor als reflektierende Beschichtung auf eine Fläche des Aktors aufgebracht ist. Dies stellt eine besonders kompakte und bauraumeffiziente Variante dar.

Bei einer vorteilhaften Ausgestaltung der Erfindung ist die optische Vorrichtung dazu ausgelegt, bei in einer ersten Position befindlichem Reflektor ein auf der Anzeigefläche angezeigtes Bild in zumindest einer Projektionsrichtung auf die Reflexiönsfläche zu projizieren, insbesondere das Licht des angezeigten Bildes auf die Reflexionsfläche zu lenken, wobei der Aktor dazu ausgelegt ist, durch eine, insbesondere phasenübergangsbedingte, Verformung in Abhängigkeit von der Temperatur den Reflektor derart aus der ersten Position zu bewegen, dass entgegen der Projektionsrichtung auf die optische Vorrichtung einfallendes Licht nicht auf die Anzeigefläche trifft. Die Anzeigefläche kann beispielsweise durch ein Display, insbesondere durch ein TFT-Display, bereitgestellt sein. Dadurch, dass Licht, das entgegen der Projektionsrichtung auf die optische Vorrichtung trifft, insbesondere Sonnenlicht, durch die temperaturabhängige Bewegung des Reflektors aus der ersten Position nicht auf die Anzeigefläche gelenkt wird, wird vorteilhafterweise gewährleistet, dass es zu keiner Beschädigung des Displays kommt.

Weiterhin ist der Aktor bevorzugt derart eingerichtet, dass dieser bei Überschreiten einer ersten vorgegebenen Grenztemperatur den Reflektor aus einer ersten Position bewegt, insbesondere um ein vorgegebenes Maß. Die Auslenkung des Aktors, so wie die Grenztemperatur kann dabei durch die Ausbildung des Aktors, das bzw. die verwendeten Materialien, die Größe, das Volumen und die geometrische Formgebung bestimmt werden. Weiterhin ist es vorteilhaft, wenn der Aktor eine gute thermische Anbindung an den Reflektor aufweist, so dass sich Temperaturänderungen des Reflektors möglichst schnell auf den Aktor übertragen. Auf diese Weise kann sichergestellt werden, dass es auch bei sehr schnellen Temperaturänderungen zu einer Bewegung des Reflektors aus seiner ersten Position kommt, bevor eine Beschädigung der Anzeigefläche auftreten kann.

Weiterhin kann der Aktor derart eingerichtet sein, dass dieser bei Unterschreiten einer zweiten vorgegebenen Grenztemperatur den Reflektor in die erste Position bewegt. Wird die Grenztemperatur unterschritten, nimmt der Aktor seinen ursprünglichen Form- bzw. Längenzustand an und bewegt somit den Reflektor zurück in seine Ausgangsposition.

Dabei kann die erste Grenztemperatur größer sein als die zweite Grenztemperatur. Der Unterschied zwischen der ersten und zweiten Grenztemperatur ist dabei durch die hysteretischen Eigenschaften des Formgedächtnismaterials bedingt und kann dabei ebenfalls durch die Ausbildung des Aktors und der verwendeten Materialien bestimmt bzw. vorgegeben werden. Die Strukturumwandlung des Formgedächtnismaterials ist dabei unabhängig von der Geschwindigkeit der Temperaturänderung. Darüber hinaus sind zur Einleitung der Phasenumwandlung die Parameter Temperatur und mechanische Spannung gleichwertig, das heißt, die Umwandlung kann nicht nur thermisch, sondern auch durch eine mechanische Spannung herbeigeführt bzw. beeinflusst werden. Diese Eigenschaft kann ebenfalls vorteilhafterweise bei der Ausbildung des Aktors dazu genutzt werden, z.B. indem der Aktor so ausgebildet wird, dass das Formgedächtnismaterial unter einer entsprechenden mechanischen Spannung steht, um die gewünschte Grenztemperatur vorzugeben, bei deren Überschreiten sich der Aktor verformt.

Bei einer weiteren vorteilhaften Ausgestaltung der Erfindung ist der Reflektor drehbar um eine Drehachse gelagert, wobei der Aktor dazu ausgelegt ist, den Reflektor um die Drehachse zu drehen. Insbesondere ist der Aktor dabei dazu ausgelegt, bei Überschreiten der ersten Grenztemperatur den Reflektor um einen vorgegebenen Winkel um die Drehachse zu drehen. Die Bewegung des Reflektors durch den Aktor kann aber auch translatorisch realisiert sein. Dies stellen besonders einfache und effektive Maßnahmen dar, um den Reflektor zu bewegen und dadurch den optischen Pfad zu ändern.

Des Weiteren betrifft die Erfindung ein Kraftfahrzeug, das eine erfindungsgemäße Anzeigeeinrichtung oder eine ihrer Ausgestaltungen aufweist. Die für die erfindungsgemäße Anzeigevorrichtung und ihre Ausführungen genannten Vorteile gelten in gleicher Weise für das erfindungsgemäße Kraftfahrzeug.

Die Anzeigeeinrichtung ist bevorzugt derart im Kraftfahrzeug angeordnet, dass die optische Vorrichtung dazu ausgelegt ist, ein auf der Anzeigefläche angezeigtes Bild als virtuelles Bild über eine Windschutzscheibe als die Reflexionsfläche zu projizieren. Das durch die optische Vorrichtung an die Windschutzscheibe geworfene bzw. projizierte Licht des angezeigten Bildes wird durch die Windschutzscheibe zum Teil reflektiert, wodurch das virtuelle Bild erzeugt wird. Insbesondere ist die Anzeigevorrichtung als Head-up-Display ausgebildet. Gerade für diesen Anwendungsfall, in dem sich die Anzeigeeinrichtung in einer sehr exponierten Lage befindet, ist das erfindungsgemäße Vorsehen eines Aktors mit einem Formgedächtnismaterial zum Bewegen des Reflektors besonders vorteilhaft, um temperaturempfindliche Bauteile der Anzeigeeinrichtung schützen zu können.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigen:
- Fig. 1: eine schematische Darstellung einer in einem Kraftfahrzeug angeordneten Anzeigeeinrichtung mit einem thermischen Formgedächtnisaktor in einer Ausgangsposition unterhalb einer Grenztemperatur zum Ändern des optischen Pfads in der Anzeigeeinrichtung gemäß einem Ausführungsbeispiel der Erfindung; und
- Fig. 2: eine schematische Darstellung der Anzeigeeinrichtung gemäß Fig. 1 mit dem thermischen Formgedächtnisaktor in seiner ausgedehnten Position oberhalb der Grenztemperatur gemäß einem Ausführungsbeispiel der Erfindung.

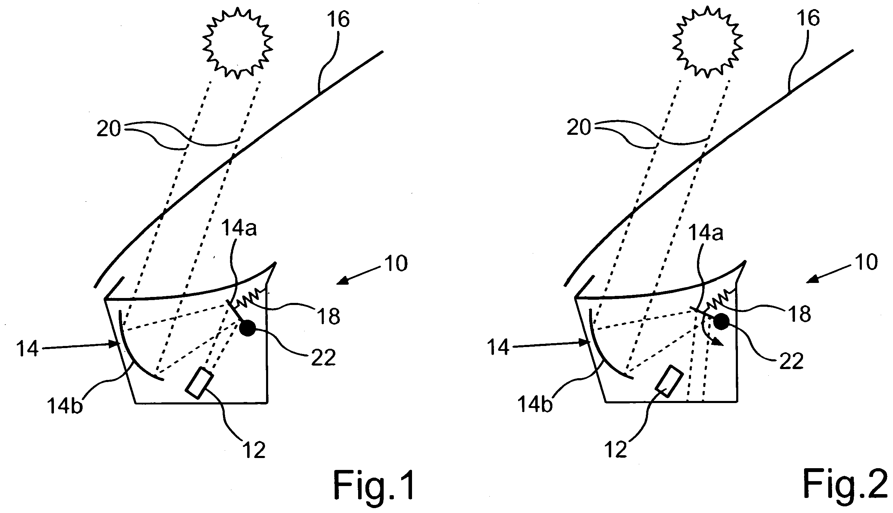

Fig. 1 und Fig. 2 zeigen eine schematische Darstellung einer in einem Kraftfahrzeug angeordneten Anzeigeeinrichtung 10 mit einer bildgebenden Einheit 12 und einer optischen Vorrichtung 14, welche einen verstellbaren Reflektor 14a umfasst, gemäß einem Ausführungsbeispiel der Erfindung. Die bildgebende Einheit 12 kann dabei ein Display mit einer Anzeigefläche aufweisen, auf der ein anzuzeigendes Bild ausgegeben wird. Das Bild wird dann über die optische Vorrichtung 14 an die Windschutzscheibe 16 des Kraftfahrzeugs projiziert, so dass dieses von einem auf dem Fahrersitz befindlichem Benutzer als virtuelles Bild wahrgenommen wird. In diesem Beispiel umfasst die optische Vorrichtung 14 einen eben ausgebildeten ersten Reflektor 14a und einen konkav geformten zweiten Reflektor 14b. Diese sind so angeordnet, dass von der bildgebenden Einheit 12 emittiertes Licht über den ersten Reflektor 14a auf den zweiten Reflektor 14b und von diesem auf einen vorbestimmten, optional über die optische Vorrichtung 14, z.B. über die Einstellung der Reflektoren 14a und/oder 14b, einstellbaren Bereich der Windschutzscheibe 16 gelenkt wird. Umgekehrt kann somit auch durch die Windschutzscheibe 16 eingestrahltes Sonnenlicht 20 über den zweiten Reflektor 14b auf den ersten Reflektor 14a und über diesen auf die bildgebende Einheit 12, insbesondere das Display, gelenkt werden.

Um nun eine Beschädigung des Displays oder auch anderer temperaturempfindlicher Bauteile der bildgebenden Einheit 12 zu verhindern, wird eine Veränderung des Strahlenganges in Abhängigkeit bestimmter Temperaturparameter vorgesehen. Dazu kann mittels eines Aktors 18 einer der Reflektoren 14a, 14b bzw. Spiegelelementen, in diesem Beispiel der erste Reflektor 14a, derart verstellt werden, dass das von außen einfallende Licht 20 nicht mehr direkt auf temperaturempfindliche Bauteile, wie z.B. das Display, der bildgebenden Einheit 12 fällt. Besonders vorteilhaft ist hierbei, dass dieser Aktor 18 als ein stromlos funktionierender thermischer Formgedächtnisaktor 18 ausgebildet ist. Prinzipbedingt ändert dieser beim Überschreiten einer bestimmten Grenztemperatur seine Form/Länge und kann so mittels einer geeigneten Kinematik den ersten Reflektor 14a verdrehen oder schwenken. Wird eine Grenztemperatur unterschritten, geht er in seinen ursprünglichen Form-/Längenzustand zurück und bewegt somit den ersten Reflektor 14a bzw. den Spiegel in seine Ausgangsposition.

Der Aktor 18 weist dabei ein Formgedächtnismaterial, wie z.B. eine Formgedächtnislegierung, auf oder ist vollständig aus einem Formgedächtnismaterial gebildet, das sich in Abhängigkeit von der Eigentemperatur durch einen Phasenübergang bei Überschreiten und Unterschreiten einer Grenztemperatur verformt. In diesem Beispiel dehnt sich der Aktor 18 bei Überschreiten einer Grenztemperatur in seiner Längserstreckungsrichtung durch die eingestrahlte Sonnenstrahlung 20 aus, wie in Fig. 2 dargestellt, und dreht dadurch den Reflektor 14a um den Lagerpunkt, bzw. die Lagerachse 22, an der der erste Reflektor 14a drehbar gelagert ist, so dass das auf den zweiten Reflektor 14b eingestrahlte Sonnenlicht 20 zumindest zum Großteil nicht über den ersten Reflektor 14a auf das Display gelenkt wird. Erniedrigt sich die Temperatur des Aktors 18 wieder und unterschreitet damit einhergehend eine bestimmte zweite Grenztemperatur, nimmt der Aktor 18 wieder seine Ausgangform und somit der erste Reflektor 14a seine Ausgangsposition, wie in Fig. 1 dargestellt, ein. Der zweite Grenzwert kann dabei unterhalb des ersten Grenzwerts liegen, was durch die hysteretischen Eigenschaften von Formgedächtnislegierungen bedingt ist. Je nach verwendetem Material, Formgebung, Größe, Volumen und Ausbildung des Aktors 18, können der erste und zweite Grenzwert vorgegeben werden und auch innerhalb einer vorgegebnen Grenze übereinstimmen. Weiterhin kann dadurch auch das Maß der Formänderung bzw. der Längenänderung und damit der Winkel, um den der erste Reflektor 14a gedreht wird, vorgegeben werden. Beispielsweise kann der Aktor 18 dabei federförmig oder spiralförmig ausgebildet sein, wodurch seine Formänderung beim Phasenübergang besonders effektiv in eine Längenänderung zur Bewegung des ersten Reflektors 14a umgesetzt werden kann.

Alternativ oder zusätzlich kann der Aktor 18 auch zur Bewegung des zweiten Reflektors 14b vorgesehen sein, um bei Überschreiten einer Grenztemperatur den optischen Lichtweg zu ändern. Auch können beide Reflektoren 14a und 14b mit einem jeweiligen Formgedächtnisaktor 18 gekoppelt sein. Darüber hinaus kann je nach Anwendungsfall die Anzeigeeinrichtung 10 auch nur einen Reflektor aufweisen, der mittels des Aktors 18 bewegt wird oder auch mehr als zwei Reflektoren, wobei dann zumindest einer dieser Reflektoren mittels des Aktors 18 bewegt wird. Auch die Reflektoren können in der Oberflächengeometrie ihrer reflektierenden Oberflächen, wie z.B. eben, konkav, konvex, und in ihrer Anordnung zueinander anders als wie hier dargestellt ausgebildet sein.

Insgesamt wird so durch die Erfindung eine Anzeigeeinrichtung bereitgestellt, die durch das Vorsehen eines stromlos funktionierenden, thermischen Formgedächtnisaktors auf besonders kostengünstige und bauraumeffiziente Weise ein Überhitzen des Displays oder anderer innerer temperaturempfindlicher Bauteile der Anzeigevorrichtung verhindern kann. Durch diese Ausbildung des Aktors übernimmt dieser somit den sensorischen als auch den aktorischen Anteil der bisher bekannten Methoden und es kann komplett auf eine elektronische Sensierung, Auswertung und Ansteuerung verzichtet werden. Durch die vollständig stromslose Funktionsweise des Aktors, wird der Schutz der inneren temperaturempfindlichen Bauteile auch bei abgestelltem Fahrzeug jederzeit gewährleistet und insgesamt durch den Formgedächtnisaktor eine besonders energiesparende rein mechanische Schutzvorrichtung bereitgestellt.

## Patentansprüche

1. Anzeigeeinrichtung (10) für ein Kraftfahrzeug, wobei die Anzeigeeinrichtung (10) eine Anzeigefläche (12) zum Anzeigen eines Bildes und eine optische Vorrichtung (14) aufweist, welche dazu ausgelegt ist, ein auf der Anzeigefläche (12) angezeigtes Bild zu projizieren, wobei die optische Vorrichtung (14) zumindest einen Reflektor (14a; 14b) und einen Aktor (18), der zum Bewegen des Reflektors (14a; 14b) ausgelegt ist, aufweist,
**dadurch gekennzeichnet, dass**
der Aktor (18) ein Formgedächtnismaterial aufweist, das dazu ausgelegt ist, sich durch einen Phasenübergang in Abhängigkeit von einer Temperatur zu verformen und dadurch den Reflektor (14a; 14b) zu bewegen, wobei die optische Vorrichtung (14) dazu ausgelegt ist, bei in einer ersten Position befindlichem Reflektor (14a; 14b) ein auf der Anzeigefläche (12) angezeigtes Bild in zumindest eine Projektionsrichtung zu projizieren, wobei der Aktor (18) dazu ausgelegt ist, den Reflektor (14a; 14b) derart aus der ersten Position zu bewegen, dass entgegen der Projektionsrichtung auf die optische Vorrichtung (14) einfallendes Licht (20) nicht auf die Anzeigefläche (12) trifft, wobei der Reflektor (14a; 14b) als reflektierende Beschichtung auf eine Fläche des Aktors (18) aufgebracht ist.

2. Anzeigeeinrichtung (10) nach einem der vorhergehenden Ansprüche,
**dadurch gekennzeichnet, dass**
der Aktor (18) derart eingerichtet ist, dass dieser bei Überschreiten einer ersten vorgegebenen Grenztemperatur den Reflektor (14a; 14b) aus einer ersten Position bewegt.

3. Anzeigeeinrichtung (10) nach einem der vorhergehenden Ansprüche,
**dadurch gekennzeichnet, dass**
der Aktor (18) derart eingerichtet ist, dass dieser bei Unterschreiten einer zweiten vorgegebenen Grenztemperatur den Reflektor (14a; 14b) in die erste Position bewegt.

4. Anzeigeeinrichtung (10) nach einem der vorhergehenden Ansprüche,
**dadurch gekennzeichnet, dass**
der Reflektor (14a; 14b) drehbar um eine Drehachse (22) gelagert ist, wobei der Aktor (18) dazu ausgelegt ist, den Reflektor (14a; 14b) um die Drehachse (22) zu drehen.

5. Kraftfahrzeug mit einer Anzeigeeinrichtung (10) nach einem der vorhergehenden Ansprüche.

6. Kraftfahrzeug nach Anspruch 5,
**dadurch gekennzeichnet, dass**
die Anzeigeeinrichtung (10) derart im Kraftfahrzeug angeordnet ist, dass die optische Vorrichtung (14) dazu ausgelegt ist, ein auf der Anzeigefläche (12) angezeigtes Bild auf eine Windschutzscheibe (16) als die Reflexionsfläche (16) zu projizieren.

## Claims

1. Display device (10) for a motor vehicle, wherein the display device (10) comprises a display area (12) for displaying an image and an optical device (14), which is configured to project an image displayed on the display area (12), wherein the optical device (14) comprises at least one reflector (14a; 14b) and an actuator (18) which is configured to move the reflector (14a; 14b),
**characterised in that**
the actuator (18) has a shape memory material, which is designed to deform with a temperature-dependent phase transition and thereby move the reflector (14a; 14b), wherein the optical device (14) is configured to project an image displayed on the display area (12) in at least one direction of projection when the reflector (14a; 14b) is in a first position, wherein the actuator (18) is configured to move the reflector (14a; 14b) out of the first position so that light (20) arriving on the optical device (14) opposite the direction of projection does not reach the display area (12), the reflector (14a; 14b) being applied as a reflective coating on an area of the actuator (18).

2. Display device (10) according to any of the preceding claims,
**characterised in that**
the actuator (18) is configured such that the latter moves the reflector (14a; 14b) out of the first position when the temperature exceeds a first predefined limit temperature.

3. Display device (10) according to any of the preceding claims,
**characterised in that**
the actuator (18) is configured such that the latter moves the reflector (14a; 14b) into the first position when the temperature falls below a second predefined limit temperature.

4. Display device (10) according to any of the preceding claims,
**characterised in that**
the reflector (14a; 14b) is mounted rotatably about an axis of rotation (22), the actuator (18) being configured to rotate the reflector (14a; 14b) about the axis of rotation (22).

5. Motor vehicle with a display device (10) according to any of the preceding claims.

6. Motor vehicle according to claim 5,
**characterised in that**
the display device (10) is arranged in the motor vehicle such that the optical device (14) is configured to project an image displayed on the display area (12) onto the windscreen (16) as the reflection surface (16).

## Revendications

1. Dispositif d'affichage (10) pour un véhicule automobile, dans lequel le dispositif d'affichage (10) comporte une surface d'affichage (12) destinée à afficher une image et un dispositif optique (14) qui est conçu pour projeter une image affichée sur le dispositif d'affichage (12), dans lequel le dispositif optique (14) comporte au moins un réflecteur (14a ; 14b) et un actionneur (18) qui est conçu pour faire bouger le réflecteur (14a ; 14b),
**caractérisé en ce que** l'actionneur (18) comporte un matériau à mémoire de forme qui est conçu pour se déformer par une transition de phase en fonction d'une température et pour faire bouger ainsi le réflecteur (14a ; 14b),
dans lequel le dispositif optique (14) est conçu pour, avec un réflecteur (14a ; 14b) se trouvant dans une première position, projeter une image affichée sur la surface d'affichage (12) dans au moins une direction de projection,
dans lequel l'actionneur (18) est conçu pour faire bouger le réflecteur (14a ; 14b) hors de la première position de telle sorte que de la lumière (20) atteignant le dispositif optique (14) à l'opposé de la direction de projection n'arrive pas sur la surface d'affichage (12),
dans lequel le réflecteur (14a ; 14b) est appliqué en tant que revêtement réfléchissant sur une surface de l'actionneur (18).

2. Dispositif d'affichage (10) selon l'une quelconque des revendications précédentes, **caractérisé en ce que** l'actionneur (18) est réalisé de telle sorte qu'il fait bouger le réflecteur (14a ; 14b) hors d'une première position lorsque la température devient supérieure à une première température limite prédéterminée.

3. Dispositif d'affichage (10) selon l'une quelconque des revendications précédentes, **caractérisé en ce que** l'actionneur (18) est réalisé de telle sorte qu'il fait bouger le réflecteur (14a ; 14b) jusque dans la première position lorsque la température devient inférieure à une deuxième température limite prédéterminée.

4. Dispositif d'affichage (10) selon l'une quelconque des revendications précédentes, **caractérisé en ce que** le réflecteur (14a ; 14b) est logé de manière à pouvoir tourner autour d'un axe de rotation (22), l'actionneur (18) étant conçu pour faire tourner le réflecteur (14a ; 14b) autour de l'axe de rotation (22).

5. Véhicule automobile avec un dispositif d'affichage (10) selon l'une quelconque des revendications précédentes.

6. Véhicule automobile selon la revendication 5, **caractérisé en ce que** le dispositif d'affichage (10) est agencé de telle manière dans le véhicule automobile que le dispositif optique (14) est conçu pour projeter une image affichée sur le dispositif d'affichage (12) sur un pare-brise (16) servant de surface de réflexion (16).
